# EUROPEAN PATENT APPLICATION

(11) **EP 4 074 384 A1**
(43) Date of publication of application: **19.10.2022**
(21) Application number: 20913294.3
(22) Date of filing: 17.01.2020
(51) Int. Cl.: A62C 3/16

(54) **BATTERY SYSTEM AND FIRE EXTINGUISHING METHOD FOR BATTERY SYSTEM**

(71) Applicant: Huawei Digital Power Technologies Co., Ltd., Shenzhen, Guangdong 518043 (CN)
(72) Inventor: ZHOU, Kui, Shenzhen, Guangdong 518129 (CN); LE, Bin, Shenzhen, Guangdong 518129 (CN); CHEN, Cheng, Shenzhen, Guangdong 518129 (CN)
(74) Representative: Gill Jennings & Every LLP
(86) International application number: PCT/CN2020/072883
(87) International publication number: WO 2021/142812

(57) **Abstract**

This application provides a battery system and a fire extinguishing method for the battery system. The battery system includes a battery management system BMS and at least one battery module. The battery management system BMS includes a first detection apparatus. The battery management system BMS is configured to obtain a risk status of the battery module by using the first detection apparatus, and the battery management system BMS is further configured to perform fire extinguishing based on the risk status. Through implementation of this application, safety of the battery system can be improved.

## Description

### TECHNICAL FIELD

This application relates to the field of energy storage systems, and in particular, to a battery system and a fire extinguishing method for the battery system.

### BACKGROUND

Cell monomers (for example, lithium ion batteries) form a battery system (also referred to as a battery energy storage system or an energy storage system) in series and parallel. The battery system is widely applied to various scenarios that require the battery energy storage system to provide power, for example, a plurality of scenarios such as electric vehicles, base station energy storage, and data center backup power. Under the circumstances of overcharge, overtemperature, an internal short circuit, and the like, the cell monomer may undergo thermal runaway, that is, may be burned. In this case, the cell monomer releases a large amount of heat. If the cell monomer is not handled in a timely manner or properly, an overall battery system may be burned, or even an explosion may be triggered, which could easily cause losses of lives and property.

Through research, the inventors find that an existing fire extinguishing manner cannot well suppress a problem of a battery fire, leading to relatively poor safety of the battery system.

### SUMMARY

This application provides a battery system and a fire extinguishing method for the battery system, so as to well suppress a battery fire and reduce a burning probability of the battery system, thereby improving safety of the battery system.

According to a first aspect, an embodiment of this application provides a battery system. The battery system includes a battery management system BMS and at least one battery module. The battery management system BMS includes a first detection apparatus. The battery management system BMS is configured to obtain a risk status of the battery module by using the first detection apparatus, and the battery management system BMS is further configured to perform fire extinguishing based on the risk status.

Through implementation of this embodiment of this application, the battery management system BMS determines the risk status of the battery module based on detection data that is obtained by the first detection apparatus (for example, the first detection apparatus may include a temperature sensor, a gas sensor, a smoke sensor, or the like), to implement monitoring of the battery module, thereby better suppressing a battery fire, reducing a burning probability of the battery system, and improving safety of the battery system.

In a possible implementation, the battery system further includes at least one first fire extinguishing apparatus, and the first fire extinguishing apparatus establishes a communication connection to the battery management system BMS. The battery management system BMS is configured to send control information to the first fire extinguishing apparatus when the battery module is in a thermal runaway state, and the first fire extinguishing apparatus is configured to spray a fire extinguishing agent on the battery module based on the control information sent by the battery management system BMS. Through implementation of this embodiment of this application, when the battery module is in the thermal runaway state, the first fire extinguishing apparatus sprays the fire extinguishing agent on the battery module under control of the battery management system BMS. In the conventional technology, both the battery management system BMS and the fire extinguishing apparatus include a detection apparatus, and the detection apparatus is configured to detect an operating status of the battery module. However, in this application, the detection apparatus is no longer disposed in the first fire extinguishing apparatus, the detection apparatus is integrated into the battery management system BMS, and the communication connection is established between the first fire extinguishing apparatus and the battery management system BMS. In this implementation, complexity of the battery system and total costs of the system can be reduced.

In a possible implementation, the battery system further includes at least one second fire extinguishing apparatus. The second fire extinguishing apparatus is configured to spray the fire extinguishing agent on the battery module when the battery module is in a burning state. Through implementation of this embodiment of this application, at least two fire extinguishing apparatuses are disposed in the battery system, and when the battery module is in the thermal runaway state, the first fire extinguishing apparatus is used to spray the fire extinguishing agent on the battery module. When the battery module is in the burning state, the second fire extinguishing apparatus is used to spray the fire extinguishing agent on the battery module. In this implementation, a battery fire can be well suppressed and a burning probability of the battery system can be reduced, thereby improving safety of the battery system.

In a possible implementation, the battery management system BMS is specifically configured to interrupt a charging/discharging process of the battery module when a safety valve of the battery module is in an open state. Through implementation of this embodiment of this application, early warning and fire extinguishing can be performed at an initial stage when a thermal runaway occurs in a battery, so as to well seize an optimal fire extinguishing occasion and reduce a burning probability of the battery system, thereby improving safety of the battery system.

In a possible implementation, the battery management system BMS is specifically configured to: when the battery management system BMS detects, by using the first detection apparatus, that a concentration value of a flammable gas released by the battery module is greater than a first concentration value, and a value of smoke released by the battery module is greater than a first smoke value, determine that the safety valve of the battery module is in the open state.

In a possible implementation, the battery management system BMS is further specifically configured to: when the battery management system BMS detects, by using the first detection apparatus, that the concentration value of the flammable gas released by the battery module is greater than a second concentration value, the value of smoke released by the battery module is greater than a second smoke value, and a temperature of the battery module is greater than a first temperature value, determine that the battery module is in the thermal runaway state.

In a possible implementation, the second fire extinguishing apparatus includes a second detection apparatus. The second fire extinguishing apparatus is specifically configured to spray the fire extinguishing agent on the battery module when the second detection apparatus detects that a temperature of the battery module is greater than a second temperature value. Through implementation of this embodiment of this application, the second fire extinguishing apparatus detects, by using the second detection apparatus (for example, the second detection apparatus may be a temperature detection apparatus) included in the second fire extinguishing apparatus, that the temperature of the battery module is greater than the second temperature value, and the second fire extinguishing apparatus sprays the fire extinguishing agent on the battery module, so as to prevent a burning phenomenon of the battery from continuously spreading, thereby improving safety of the battery system.

In a possible implementation, the battery management system BMS includes a sending apparatus. The sending apparatus is configured to send the control information to the first fire extinguishing apparatus when the battery module is in a thermal runaway state.

According to a second aspect, an embodiment of this application provides a fire extinguishing method for a battery system. The battery system includes a battery management system BMS and at least one battery module. The battery management system BMS includes a first detection apparatus. The method includes: The battery management system BMS obtains a risk status of the battery module by using the first detection apparatus, and the battery management system BMS performs fire extinguishing based on the risk status.

Through implementation of this embodiment of this application, the battery management system BMS determines the risk status of the battery module based on detection data that is obtained by the first detection apparatus (for example, the first detection apparatus may include a temperature sensor, a gas sensor, a smoke sensor, or the like), to implement monitoring of the battery module, thereby better suppressing a battery fire, reducing a burning probability of the battery system, and improving safety of the battery system.

In a possible implementation, the battery system further includes a first fire extinguishing apparatus, and the method further includes: sending control information to the first fire extinguishing apparatus when the battery module is in a thermal runaway state, where the control information is used to control the first fire extinguishing apparatus to spray a fire extinguishing agent on the battery module.

In a possible implementation, the battery system further includes a second fire extinguishing apparatus, and the method further includes: spraying the fire extinguishing agent on the battery module when the battery module is in a burning state.

In a possible implementation, that the battery management system BMS performs fire extinguishing based on the risk status includes: interrupting a charging/discharging process of the battery module when a safety valve of the battery module is in an open state.

In a possible implementation, that the battery management system BMS obtains a risk status of the battery module by using the first detection apparatus includes: when the battery management system BMS detects, by using the first detection apparatus, that a concentration value of a flammable gas released by the battery module is greater than a first concentration value, and a value of smoke released by the battery module is greater than a first smoke value, determining that the safety valve of the battery module is in the open state.

In a possible implementation, that the battery management system BMS obtains a risk status of the battery module by using the first detection apparatus further includes: when the battery management system BMS detects, by using the first detection apparatus, that the concentration value of the flammable gas released by the battery module is greater than a second concentration value, the value of smoke released by the battery module is greater than a second smoke value, and a temperature of the battery module is greater than a first temperature value, determining that the battery module is in the thermal runaway state.

In a possible implementation, the second fire extinguishing apparatus includes a second detection apparatus, and the spraying the fire extinguishing agent on the battery module when the battery module is in a burning state includes: spraying the fire extinguishing agent on the battery module when the second detection apparatus detects that a temperature of the battery module is greater than a second temperature value.

In a possible implementation, the battery management system BMS includes a sending apparatus, and the sending control information to the first fire extinguishing apparatus when the battery module is in a thermal runaway state includes:
the battery management system BMS sends, by using the sending apparatus, the control information to the first fire extinguishing apparatus when the battery module is in the thermal runaway state.

According to a third aspect, an embodiment of this application provides a cabinet. The cabinet includes the battery system according to any one of the first aspect or the possible implementations of the first aspect.

According to a fourth aspect, an embodiment of this application provides an electronic device. The electronic device includes the battery system according to any one of the first aspect or the possible implementations of the first aspect.

### BRIEF DESCRIPTION OF DRAWINGS

FIG. 1 is a schematic diagram of a scenario of thermal runaway burning of a cell monomer according to an embodiment of this application;
FIG. 2a is a schematic diagram of a structure of a battery system according to an embodiment of this application;
FIG. 2b is a schematic diagram of a structure of another battery system according to an embodiment of this application;
FIG. 2c is a schematic diagram of a structure of still another battery system according to an embodiment of this application;
FIG. 3 is a schematic diagram of a structure of yet another battery system according to an embodiment of this application;
FIG. 4 is a schematic diagram of a structure of still yet another battery system according to an embodiment of this application;
FIG. 5a is a schematic flowchart of a fire extinguishing method for a battery system according to an embodiment of this application;
FIG. 5b is a schematic flowchart of another fire extinguishing method for a battery system according to an embodiment of this application;
FIG. 5c is a schematic flowchart of still another fire extinguishing method for a battery system according to an embodiment of this application;
FIG. 5d is a schematic flowchart of yet another fire extinguishing method for a battery system according to an embodiment of this application;
FIG. 6 is a schematic block diagram of a battery management system BMS according to this application;
FIG. 7 is a schematic diagram of a cabinet according to an embodiment of this application; and
FIG. 8 is a schematic diagram of an electronic device according to an embodiment of this application.

### DESCRIPTION OF EMBODIMENTS

The following describes embodiments of this application with reference to accompanying drawings in embodiments of this application.

In the specification, claims, and accompanying drawings of this application, terms "first", "second", "third", "fourth", and the like are intended to distinguish between different objects but do not indicate a particular order. In addition, terms "including", "having", and any other variant thereof are intended to cover non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

Mentioning an "embodiment" in this specification means that a particular characteristic, structure, or feature described with reference to the embodiment may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in this specification may be combined with another embodiment.

Terms such as "component", "module", and "system" used in this specification are used to indicate computer-related entities, hardware, firmware, combinations of hardware and software, software, or software being executed. For example, the component may be but is not limited to a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed by various computer-readable media that store various data structures. The components may communicate with each other by using a local and/or remote process and based on, for example, a signal having one or more data packets (for example, data from two components interacting with another component in a local system or a distributed system and/or across a network such as the internet interacting with other systems by using a signal).

To help better understand the technical solutions described in this application, the following first explains technical terms used in embodiments of this application.

### (1) Thermal runaway

In embodiments of this application, an entire process of the thermal runaway may be divided into the following processes:
A battery is in the thermal runaway state and heat accumulates. → The battery reacts with the heat and generates a gas. → Heat accumulation of the battery is intensified, and a safety valve of the battery is ruptured. → A flammable and explosive gas inside the battery leaks outward. → The heat accumulates in the battery and the battery sprays sparks outward. → The heat accumulates in the battery, the battery sprays flame outward, and an external flammable and explosive gas explodes. → The battery continuously burns and sprays smoke. It should be noted that the thermal runaway phenomenon may spread so rapidly that the battery burns. The plurality of stages of the entire process of the thermal runaway used herein are of short duration.

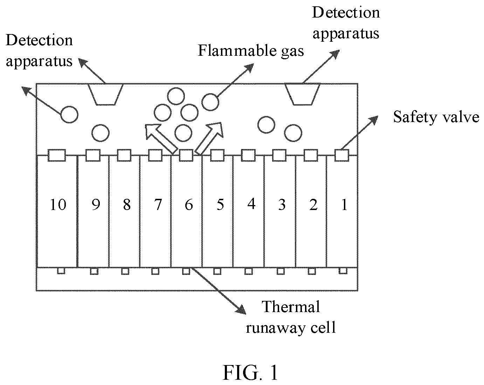

In the battery system, a scenario of thermal runaway burning of a cell monomer may be shown in FIG. 1. In FIG. 1, a battery system includes a plurality of cells (namely, cell monomers). A cell 6 is in a thermal runaway state, releasing a flammable gas, smoke, and the like. The flammable gas fills an entire housing of the battery system, and is mixed with air. If the flammable gas is not handled in a timely manner, the entire battery system may be burned or even exploded. It should be noted that, a quantity of cell monomers included in the battery system shown in FIG. 1 is merely used as an example, and should not constitute a limitation.

### (2) Gas sensor

In embodiments of this application, when a safety valve of a battery is in an open state or the battery is in a thermal runaway state, a battery module releases a gas. The gas generally includes hydrogen, methane, ethane, acetylene, ethylene, carbon dioxide, carbon monoxide, and the like.

In embodiments of this application, the flammable gas is a gas that is likely to be burned or exploded and that is released from the battery, for example, one or more of the hydrogen, the methane, the ethane, the acetylene, the ethylene, and the carbon monoxide.

In embodiments of this application, the gas sensor may be a single sensor, or may be a gas sensor group. In an example, when the gas sensor is the gas sensor group, the gas sensor group uses one or more of a hydrogen sensor, a methane sensor, an ethane sensor, an acetylene sensor, an ethylene sensor, and a carbon monoxide sensor to constitute a flammable and explosive gas sensor, to detect the flammable and explosive gas.

In embodiments of this application, the gas sensor may be used to monitor the flammable and explosive gas released by the battery. In this implementation, fire warning time can be earlier, and more sufficient processing time can be provided. In the conventional technology, that the battery is in a thermal runaway state is used as an example, and steps of thermal runaway of the battery may include: 1. The battery is in the thermal runaway state and heat accumulates. → 2. The battery reacts with the heat and generates a gas. → 3. Heat accumulation of the battery is intensified, and a safety valve of the battery is ruptured. → 4. A flammable and explosive gas inside the battery leaks outward. → 5. The heat accumulates in the battery and the battery sprays sparks outward. → 6. The heat accumulates in the battery, the battery sprays flame outward, and an external flammable and explosive gas explodes. → 7. The battery continuously burns and sprays smoke. The use of the flammable and explosive gas sensor can advance the early warning time from step 7 to step 4, so that the early warning time of fire can be earlier. In this implementation, the early warning time can be prolonged, and an optimal fire extinguishing occasion at an initial stage of burning can be seized, thereby greatly reducing a burning probability of the system.

### (3) Fire extinguishing apparatus

In the conventional technology, occurrence and development of burning need four necessary conditions (also referred to as four factors of burning), that is, a flammable substance, a combustion-supporting substance, an ignition source, and a free radical (chain reaction). Different fire extinguishing agents have different fire extinguishing mechanisms. A speed of one or more stages of burning is suppressed by eliminating one or more of the four necessary conditions of burning. To be specific, a source of a specific stage is cut off, or the chain reaction is interrupted, to stop generation of the free radical, thereby implementing fire extinguishing.

Generally, based on the four factors of burning, the fire extinguishing mechanisms of the fire extinguishing agents may be classified into four categories: isolation, suffocation, cooling, and chemical inhibition.

In embodiments of this application, the fire extinguishing apparatus may control spray time of the fire extinguishing agent in the fire extinguishing apparatus in an electric control manner. When the apparatus is started, a large amount of fire extinguishing agent can be instantaneously sprayed to suppress burning of the battery module.

In embodiments of this application, the fire extinguishing agent may be one or more of perfluorohexanone, heptafluoropropane, an aerosol, nitrogen, and carbon dioxide.

In an example, the fire extinguishing mechanism of the fire extinguishing agent is chemical inhibition. For example, when the fire extinguishing agent is the aerosol, the fire extinguishing apparatus may heat the aerosol. Under the action of heat, gasifying metal ions, such as Sr, K, Mg, or an electron-losing cation, decomposed in the aerosol exist in a form of steam. Due to their extremely strong activity, the gasifying metal ions may have a plurality of chain reactions with active groups H, OH, and O in burning. Finally, non-burning solids such as SrO are formed. After multiple reactions, the active groups in the combustion are almost exhausted and their concentration is continuously reduced. In this way, the combustion is suppressed.

In an example, the fire extinguishing mechanism of the fire extinguishing agent is cooling. For example, when the fire extinguishing agent is the perfluorohexanone, the fire extinguishing apparatus may process liquid perfluorohexanone into a mist state, and pressurize and spray the perfluorohexanone in the mist state on an ignition point. The perfluorohexanone mainly relies on heat absorption to achieve a fire extinguishing effect.

In embodiments of this application, a first fire extinguishing apparatus may include a fire extinguishing agent and a communications apparatus. The communications apparatus is configured to establish a communication connection to a battery management system BMS. In an example, the communications apparatus may communicate with the battery management system BMS through a bus. In an example, the communications apparatus may communicate with the battery management system BMS in a wireless Bluetooth manner. Specifically, the communications apparatus may include a microprocessor and a communications interface. In embodiments of this application, when a battery module is in a thermal runaway state, the battery management system BMS may send control information to the communications apparatus, and the communications apparatus releases the fire extinguishing agent based on the control information, to perform fire extinguishing on the battery module.

In embodiments of this application, a second fire extinguishing apparatus may include a fire extinguishing agent and a second detection apparatus. For example, the second detection apparatus may be a temperature detection apparatus. For example, the temperature detection apparatus may include one of a heat sensitive line and a temperature sensitive line.

In an example, the temperature detection apparatus may be the heat sensitive line. When the heat sensitive line detects that a temperature of the battery module is greater than a second temperature value, for example, the second temperature value is 170°C, the second fire extinguishing apparatus is triggered to release the fire extinguishing agent.

In an example, the temperature detection apparatus may be a detection apparatus including the temperature sensitive line. In a room temperature state, the temperature sensitive line is in an open-circuit state. In a high temperature state, the temperature sensitive line is in a short-circuit state, and the second fire extinguishing apparatus is triggered to release the fire extinguishing agent.

Application scenarios to which the technical solutions described in this application are applicable are as follows: When the battery system is in use, the safety valve of the cell monomer is in an open state, the cell monomer is in a thermal runaway state, and even the cell monomer is not effectively controlled due to a thermal runaway phenomenon, causing burning. These application scenarios may cover a plurality of product scenarios such as an electric vehicle, an energy storage container, an energy storage module for a communications base station, an energy storage module for a data center, and an uninterruptible power system (Uninterruptible Power System, UPS) of a lithium-ion battery, and may cover use states of all cell monomers, including four typical operating states: a charging state, a discharging state, a power backup state, and a sleep state. The following describes some of these scenarios.

### Scenario 1: Electric vehicle

In electric vehicle manufacturers, as an industrial product, the cell monomer usually has a specific fire probability due to a manufacturing process, quality management, and the like. When the safety valve of the cell monomer in a battery pack is opened, the cell monomer is in a thermal runaway state, or even the cell monomer is burned, if detection and control cannot be performed in a timely manner, the entire battery pack is burned or exploded when the cell monomer fire spreads to the entire battery pack. In this case, a driver may not have sufficient time to escape due to a lack of timely warning, resulting in casualties.

According to the technical solutions described in embodiments of this application, a risk status of the cell monomer (or the battery module) may be quickly detected, and different fire extinguishing policies may be executed based on different risk statuses. For example, when a safety valve of the battery module is in an open state, a charging/discharging process of the battery module is interrupted. In this implementation, a probability of thermal runaway of the battery module can be effectively avoided. For another example, when the battery module is in the thermal runaway state, the first fire extinguishing apparatus is used to perform fire extinguishing. In this implementation, flammable and explosive substances released by the battery module can be suppressed from being ignited. For another example, when the battery module is in a burning state, the second fire extinguishing apparatus is used to perform fire extinguishing. In this implementation, the fire can be suppressed from spreading to the entire battery system, and a burning probability of the battery system can be reduced.

### Scenario 2: Energy storage for the communications base station

In the conventional technology, communications base stations may be installed in various complex natural environments, and a short-circuit phenomenon caused by water leakage and rat damage occasionally occurs. When the cell monomer is short-circuited, the cell monomer is very likely to encounter a thermal runaway phenomenon. If the thermal runaway phenomenon is not effectively controlled, the cell monomer usually further encounters a fire phenomenon. With vigorous development of a network era, importance of the communications base station is self-evident. If a serious fire occurs in the communications base station, hundreds of thousands or even millions of economic losses may be easily caused.

According to the technical solutions described in embodiments of this application, a risk status of the cell monomer (or the battery module) may be quickly detected, and different fire extinguishing policies may be executed based on different risk statuses. For example, when a safety valve of the battery module is in an open state, a charging/discharging process of the battery module is interrupted. In this implementation, a probability of thermal runaway of the battery module can be effectively avoided. For another example, when the battery module is in the thermal runaway state, the first fire extinguishing apparatus is used to perform fire extinguishing. In this implementation, flammable and explosive substances released by the battery module can be suppressed from being ignited. For another example, when the battery module is in a burning state, the second fire extinguishing apparatus is used to perform fire extinguishing. In this implementation, the fire can be suppressed from spreading to the entire battery system, and a burning probability of the battery system can be reduced.

It should be noted that the foregoing several application scenarios are merely used as examples, and the battery system described in this application is not limited to the foregoing several application scenarios.

The following describes a structure of a battery system used in embodiments of this application.

In embodiments of this application, the battery system includes a plurality of cell monomers (namely, a cell and a battery), and the plurality of cell monomers form a battery module. A plurality of battery modules may form one battery pack (pack), and a plurality of battery packs form the battery system. Each battery module has a battery module housing, each battery pack has a battery pack housing, and the battery system has a battery system housing.

It should be noted that, in some implementations, the battery modules in the battery system may not form a battery pack, and the battery system may include one or more battery modules.

In embodiments of this application, in consideration of convenient installation and replacement of batteries in the battery system and ensuring that an output voltage can meet a requirement of an electrical device, a plurality of cell monomers are usually connected in series or in parallel to form a battery module, and then the battery modules are connected in series or in parallel to form a battery pack. In this implementation, it can be ensured that the output voltage of the battery system falls within a range of 4 V to 1000 V, but is not limited to the voltage range.

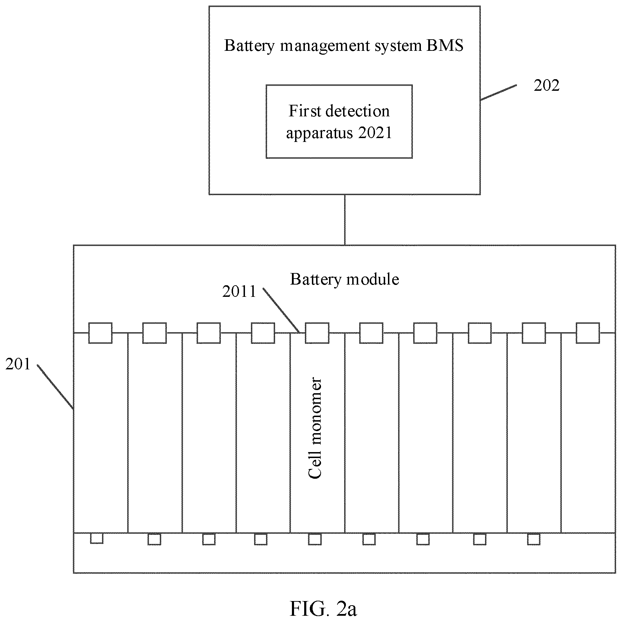

FIG. 2a is a schematic diagram of a structure of a battery system according to an embodiment of this application. As shown in FIG. 2a, the battery management system includes at least one battery module 201 and a battery management system BMS 202. The battery module 201 may include a plurality of cell monomers 2011. The battery management system BMS 202 may include a first detection apparatus 2021.

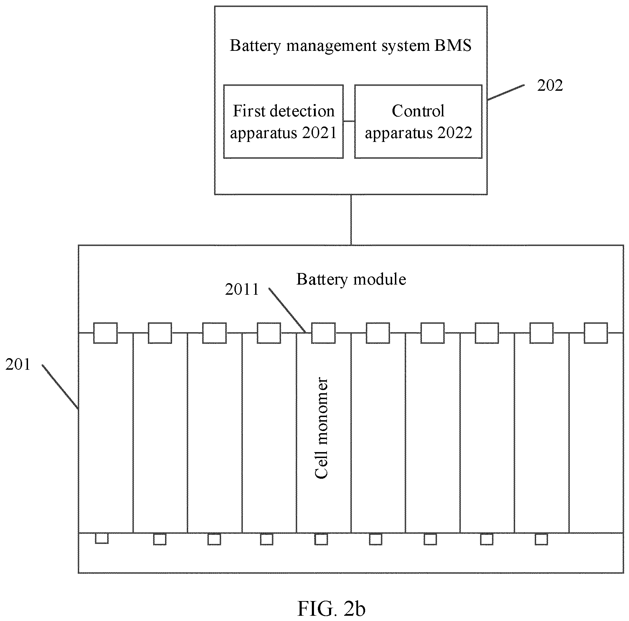

In an example, as shown in FIG. 2b, the battery management system BMS 202 may further include a control apparatus 2022.

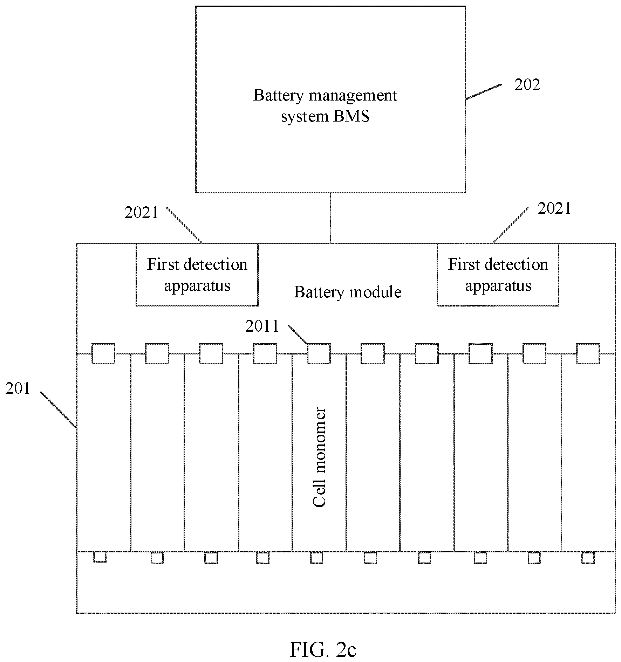

In an example, as shown in FIG. 2a, one or more first detection apparatuses 2021 may be disposed inside the battery management system BMS. In an example, as shown in FIG. 2c, one or more first detection apparatuses 2021 may be alternatively disposed above the plurality of cell monomers 2011. This is not specifically limited in this embodiment of this application.

Specifically, the first detection apparatus 2021 is configured to detect data of the battery module. For example, the data may include a voltage, a current, operating temperature information, concentration of a released flammable gas, released smoke, and the like. The control apparatus 2022 is configured to perform processing based on the data of the battery module obtained by the first detection apparatus 2021, and give a policy and an instruction for a next step.

In this embodiment of this application, the first detection apparatus 2021 may include at least one of a temperature sensor, a gas sensor, and a smoke sensor. The temperature sensor is configured to detect a temperature of the battery module. For example, the temperature sensor may detect the temperature of the battery module in real time. The gas sensor is configured to detect the concentration of a flammable and explosive gas released by the battery module. The smoke sensor is configured to detect a value of smoke released by the battery module.

In this embodiment of this application, an implementation process in which the battery management system BMS 202 obtains a risk status of the battery module may include: when the battery management system BMS detects, by using the first detection apparatus, that a concentration value of the flammable gas released by the battery module is greater than a first concentration value, and the value of smoke released by the battery module is greater than a first smoke value, determining that a safety valve of the battery module is in an open state. For example, if the battery management system BMS detects, by using the gas sensor, that the concentration of the flammable gas released by the battery module is greater than the first concentration value (for example, the first concentration value is 2%), and detects, by using the smoke sensor, that the value of smoke released by the battery module is greater than the first smoke value (for example, 1%), the battery management system BMS determines that the safety valve of the battery module is in the open state.

In this embodiment of this application, the battery management system BMS 202 may be configured to interrupt a charging/discharging process of the battery module when the safety valve of the battery module is in the open state. Specifically, the battery management system BMS 202 may selectively cut off a relay, and control, by controlling the relay, connection or disconnection of an external power supply line of the battery module or battery pack in danger. In this implementation, early warning and fire extinguishing can be performed at an initial stage when a thermal runaway occurs in a battery, so as to well seize an optimal fire extinguishing occasion and reduce a burning probability of the battery system, thereby improving safety of the battery system.

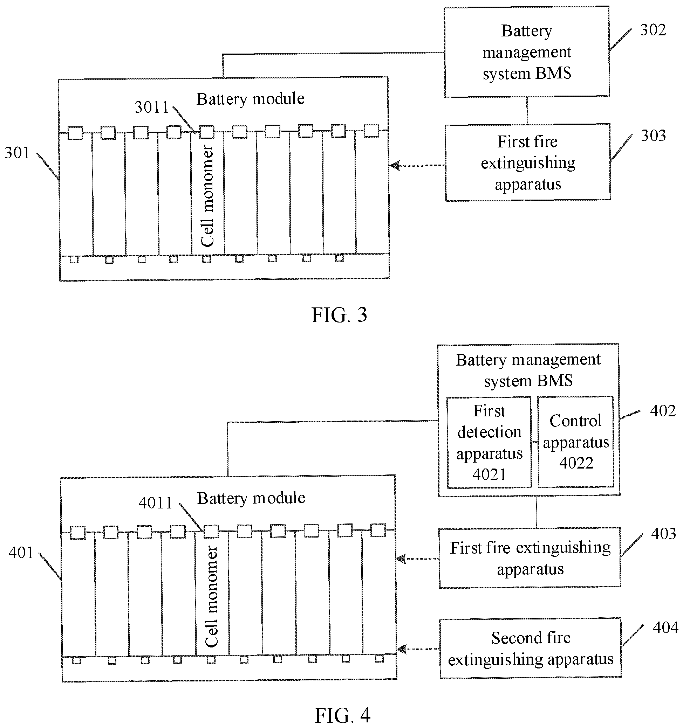

FIG. 3 is a schematic diagram of a structure of another battery system according to an embodiment of this application. As shown in FIG. 3, the battery system includes at least one battery module 301, a battery management system BMS 302, and a first fire extinguishing apparatus 303. A communication connection is established between the first fire extinguishing apparatus 303 and the battery management system 302. For example, the first fire extinguishing apparatus 303 may communicate with the battery management system BMS 302 through a bus. For another example, the first fire extinguishing apparatus 303 may communicate with the battery management system BMS 302 in a wireless Bluetooth manner. Specifically, the battery management system 303 may further supply power to the first fire extinguishing apparatus 303.

The battery module 301 may include a plurality of cell monomers 3011. The battery management system BMS 302 may include a first detection apparatus 3021 and a control apparatus 3022. The first fire extinguishing apparatus 303 may include a fire extinguishing agent and a communications apparatus. The communications apparatus is configured to communicate with the battery management system BMS 302. For example, the communications apparatus may include a microprocessor and a communications interface.

With structures shown in FIG. 2a and FIG. 2c, similarly, in this embodiment of this application, the first detection apparatus 3021 may be disposed inside the battery management system BMS, or may be disposed above the plurality of cell monomers 3011. This is not specifically limited in this embodiment of this application.

In this embodiment of this application, the battery management system BMS 302 may be configured to: determine a risk status of the battery module, where the risk status of the battery module may include at least one of the following: a safety valve of the battery module is in an open state and the battery module is in a thermal runaway state; and perform fire extinguishing based on the risk status of the battery module.

In this embodiment of this application, an implementation process in which the battery management system BMS 302 obtains the risk status of the battery module may include: when the battery management system BMS detects, by using the first detection apparatus, that a concentration value of a flammable gas released by the battery module is greater than a first concentration value, and a value of smoke released by the battery module is greater than a first smoke value, determining that the safety valve of the battery module is in the open state; or when the battery management system BMS detects, by using the first detection apparatus, that the concentration value of the flammable gas released by the battery module is greater than a second concentration value, the value of smoke released by the battery module is greater than a second smoke value, and a temperature of the battery module is greater than a first temperature value, determining that the battery module is in the thermal runaway state.

For example, if the battery management system BMS detects, by using the gas sensor, that the concentration of the flammable gas released by the battery module is greater than the first concentration value (for example, the first concentration value is 2%), and detects, by using the smoke sensor, that the value of smoke released by the battery module is greater than the first smoke value (for example, 1%), the battery management system BMS determines that the safety valve of the battery module is in the open state. If the battery management system BMS detects, by using the gas sensor, that the concentration value of the flammable gas released by the battery module is greater than the second concentration value (for example, the second concentration value is 4%), and detects, by using the smoke sensor, that the value of smoke released by the battery module is greater than the second smoke value (for example, the second smoke value is 2%), the battery management system BMS determines that the battery module is in the thermal runaway state.

In this embodiment of this application, an implementation process of executing a fire extinguishing policy based on the risk status of the battery module may include the following cases:

For example, when the safety valve of the battery module is in the open state, the battery management system BMS 302 interrupts the charging/discharging process of the battery module. Specifically, the battery management system BMS 302 may selectively cut off a relay, and control, by controlling the relay, connection or disconnection of an external power supply line of the battery module or battery pack in danger. In this implementation, early warning and fire extinguishing can be performed at an initial stage when a thermal runaway occurs in a battery, so as to well seize an optimal fire extinguishing occasion and reduce a burning probability of the battery system, thereby improving safety of the battery system.

For another example, when the battery module is in the thermal runaway state, the battery management system BMS 302 sends control information to the first fire extinguishing apparatus, where the control information is used to indicate the first fire extinguishing apparatus 303 to spray the fire extinguishing agent on the battery module, so that the first fire extinguishing apparatus 303 may release the fire extinguishing agent based on the control information, to suppress the thermal runaway phenomenon from spreading further.

In an example, in the battery system shown in FIG. 3, the battery management system BMS 302 detects, by using the first detection apparatus 3021, that a cell monomer 6 is in a thermal runaway state. In this case, the battery management system BMS 302 sends control information to the first fire extinguishing apparatus 303. For example, the control information includes "006, start fire extinguishing", so that the first fire extinguishing apparatus 303 can perform fire extinguishing on the cell monomer 6 based on the control information.

It should be noted that, in this embodiment of this application, the first fire extinguishing apparatus may be disposed outside the battery system, or may be disposed inside the battery system. This is not specifically limited in this embodiment of this application. For example, the battery system includes a battery system housing. In an example, the first fire extinguishing apparatus may be disposed inside the battery system housing.

FIG. 4 is a schematic diagram of a structure of still another battery system according to an embodiment of this application. As shown in FIG. 4, the battery system includes at least one battery module 401, a battery management system BMS 402, at least one first fire extinguishing apparatus 403, and at least one second fire extinguishing apparatus 404. A communication connection is established between the first fire extinguishing apparatus 403 and the battery management system 402. For example, the first fire extinguishing apparatus 403 may communicate with the battery management system BMS 402 through a bus. For another example, the first fire extinguishing apparatus 403 may communicate with the battery management system BMS 402 in a wireless Bluetooth manner. Specifically, the battery management system 403 may further supply power to the first fire extinguishing apparatus 403.

The battery module 401 may include a plurality of cell monomers 4011. The battery management system BMS 402 may include a first detection apparatus 4021 and a control apparatus 4022. The first fire extinguishing apparatus 403 may include a fire extinguishing agent and a communications apparatus. The communications apparatus is configured to communicate with the battery management system BMS 402. The second fire extinguishing apparatus 404 may include a fire extinguishing agent and a second detection apparatus.

With structures shown in FIG. 2a and FIG. 2c, similarly, in this embodiment of this application, the first detection apparatus 4021 may be disposed inside the battery management system BMS, or may be disposed above the plurality of cell monomers 4011. This is not specifically limited in this embodiment of this application.

Specifically, the first detection apparatus 4021 is configured to detect data of the battery module, for example, the data may include a voltage, a current, operating temperature information, concentration of a released flammable gas, released smoke, and the like. The control apparatus 4022 is configured to perform processing based on the data of the battery module obtained by the first detection apparatus 4021, to obtain control information and/or an instruction. For example, the control information may include: controlling the first fire extinguishing apparatus to spray the fire extinguishing agent on the battery module. For another example, the instruction may include: interrupting a charging/discharging process of the battery module.

In this embodiment of this application, the first detection apparatus 4021 may include at least one of a temperature sensor, a gas sensor, and a smoke sensor. The temperature sensor is configured to detect a temperature of the battery module. For example, the temperature sensor may detect the temperature of the battery module in real time. The gas sensor is configured to detect the concentration of a flammable and explosive gas released by the battery module. The smoke sensor is configured to detect a value of smoke released by the battery module.

In this embodiment of this application, the battery management system BMS 402 may be configured to determine a risk status of the battery module, and execute a fire extinguishing policy based on the risk status of the battery module.

In this embodiment of this application, an implementation process in which the battery management system BMS obtains the risk status of the battery module may include: if the battery management system BMS detects, by using the first detection apparatus, that a concentration value of the flammable gas released by the battery module is greater than a first concentration value, and a value of smoke released by the battery module is greater than a first smoke value, determining that a safety valve of the battery module is in an open state; or if the battery management system BMS detects, by using the first detection apparatus, that the concentration value of the flammable gas released by the battery module is greater than a second concentration value, the value of smoke released by the battery module is greater than a second smoke value, and a temperature of the battery module is greater than a first temperature value, determining that the battery module is in a thermal runaway state.

For example, if the battery management system BMS detects, by using the gas sensor, that the concentration of the flammable gas released by the battery module is greater than the first concentration value (for example, the first concentration value is 2%), and detects, by using the smoke sensor, that the value of smoke released by the battery module is greater than the first smoke value (for example, 1%), the battery management system BMS determines that the safety valve of the battery module is in the open state. If the battery management system BMS detects, by using the gas sensor, that the concentration value of the flammable gas released by the battery module is greater than the second concentration value (for example, the second concentration value is 4%), and detects, by using the smoke sensor, that the value of smoke released by the battery module is greater than the second smoke value (for example, the second smoke value is 2%), the battery management system BMS determines that the battery module is in the thermal runaway state.

In this embodiment of this application, the implementation process of executing the fire extinguishing policy based on the risk status of the battery module may include the following case: For example, when the safety valve of the battery module is in the open state, the battery management system BMS 402 interrupts the charging/discharging process of the battery module. Specifically, the battery management system BMS 402 may selectively cut off a relay, and control, by controlling the relay, connection or disconnection of an external power supply line of the battery module or battery pack in danger. In this implementation, early warning and fire extinguishing can be performed at an initial stage when a thermal runaway occurs in a battery, so as to well seize an optimal fire extinguishing occasion and reduce a burning probability of the battery system, thereby improving safety of the battery system.

For another example, when the battery module is in the thermal runaway state, the battery management system BMS 402 sends control information to the first fire extinguishing apparatus, where the control information is used to indicate the first fire extinguishing apparatus 403 to spray the fire extinguishing agent on the battery module, so that the first fire extinguishing apparatus 403 may release the fire extinguishing agent based on the control information, to suppress the thermal runaway phenomenon from spreading further.

In some implementations, when the first fire extinguishing apparatus 403 does not well suppress a flammable and explosive substance released by the battery module from being ignited, in this case, the second fire extinguishing apparatus 404 may be further used to control the fire. In other words, the second fire extinguishing apparatus 404 is configured to spray the fire extinguishing agent on the battery module when the battery module is in a burning state.

As described above, the second fire extinguishing apparatus 404 includes the fire extinguishing agent and the second detection apparatus. For example, the second detection apparatus may be a temperature detection apparatus. For example, the temperature detection apparatus may include one of a heat sensitive line and a temperature sensitive line.

In an example, the temperature detection apparatus may be the heat sensitive line. When the heat sensitive line detects that the temperature of the battery module is greater than the second temperature value, for example, the second temperature value is 170°C, the second fire extinguishing apparatus 404 is triggered to release the fire extinguishing agent. In this implementation, the fire can be suppressed from spreading to the entire battery system, and a burning probability of the battery system can be reduced.

In an example, the temperature detection apparatus may be alternatively a detection apparatus including a temperature sensitive line. For example, the detection apparatus may include a battery, an electric igniter, and a temperature sensitive line. The battery, the electric igniter, and the temperature sensitive line are connected in series. In a room temperature state, the temperature sensitive line is in an open-circuit state. In a high temperature state, the temperature sensitive line is in a short-circuit state, and the battery supplies power to the electric igniter, to trigger the second fire extinguishing apparatus 404 to release the fire extinguishing agent. In this implementation, the fire can be suppressed from spreading to the entire battery system, and a burning probability of the battery system can be reduced.

It should be noted that, in this embodiment of this application, the at least two fire extinguishing apparatuses may be disposed outside the battery system, or may be disposed inside the battery system. This is not specifically limited in this embodiment of this application. For example, the battery system includes a battery system housing. In an example, the at least two fire extinguishing apparatuses may be disposed inside the battery system housing.

It can be learned from the foregoing description that, because at least two fire extinguishing apparatuses are disposed inside the battery system, when the battery module is in a thermal runaway state, the first fire extinguishing apparatus is used to spray the fire extinguishing agent on the battery module. When the battery module is in a burning state, the second fire extinguishing apparatus is used to spray the fire extinguishing agent on the battery module. In this implementation, the battery fire can be well suppressed and the burning probability of the battery system can be reduced, thereby improving safety of the battery system.

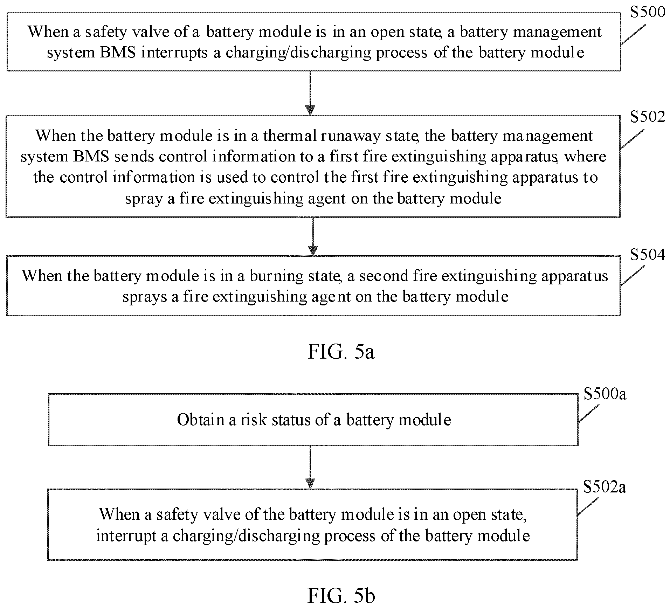

The battery system shown in FIG. 4 is used as an example. The battery system includes the battery management system BMS and the at least two fire extinguishing apparatuses. The at least two fire extinguishing apparatuses include at least one first fire extinguishing apparatus and at least one second fire extinguishing apparatus. With reference to schematic flowcharts of a fire extinguishing method for a battery system provided in embodiments of this application shown in FIG. 5a to FIG. 5d, the following specifically describes how to implement fire extinguishing in embodiments of this application.

The method steps shown in FIG. 5a should be understood as a plurality of fire extinguishing policies included in actual use of the battery system. Specifically, when the battery module is in different risk statuses, corresponding fire extinguishing policies are different. For example, when a safety valve of a battery module is in an open state, a battery management system BMS interrupts a charging/discharging process of the battery module. For another example, when the battery module is in a thermal runaway state, the battery management system BMS sends control information to the first fire extinguishing apparatus, where the control information is used to control a first fire extinguishing apparatus to spray a fire extinguishing agent on the battery module. For another example, when the battery module is in a burning state, a second fire extinguishing apparatus sprays a fire extinguishing agent on the battery module. The following describes details.

In a case, the safety valve of the battery module is in the open state. As shown in FIG. 5b, the method is applied to the battery management system BMS. The method may include but is not limited to the following steps.

Step S500a: The battery management system BMS obtains a risk status of the battery module.

Step S502a: When the safety valve of the battery module is in the open state, interrupt the charging/discharging process of the battery module.

In this embodiment of this application, the battery management system BMS includes a first detection apparatus and a control apparatus. Specifically, the battery management system BMS sends collected risk status data of the battery module to the control apparatus by using the first detection apparatus, and then the control apparatus receives the risk status data, and obtains the risk status of the battery module based on the risk status data. When the safety valve of the battery module is in the open state, the charging/discharging process of the battery module is interrupted.

For specific implementation of step S500a to step S502a, refer to the foregoing description. Details are not described herein again. It may be understood that this method may be applied to the battery systems shown in FIG. 2a, FIG. 3, and FIG. 4.

Through implementation of this embodiment of this application, early warning and fire extinguishing can be performed at an initial stage when a thermal runaway occurs in a battery, so as to well seize an optimal fire extinguishing occasion and reduce a burning probability of the battery system, thereby improving safety of the battery system.

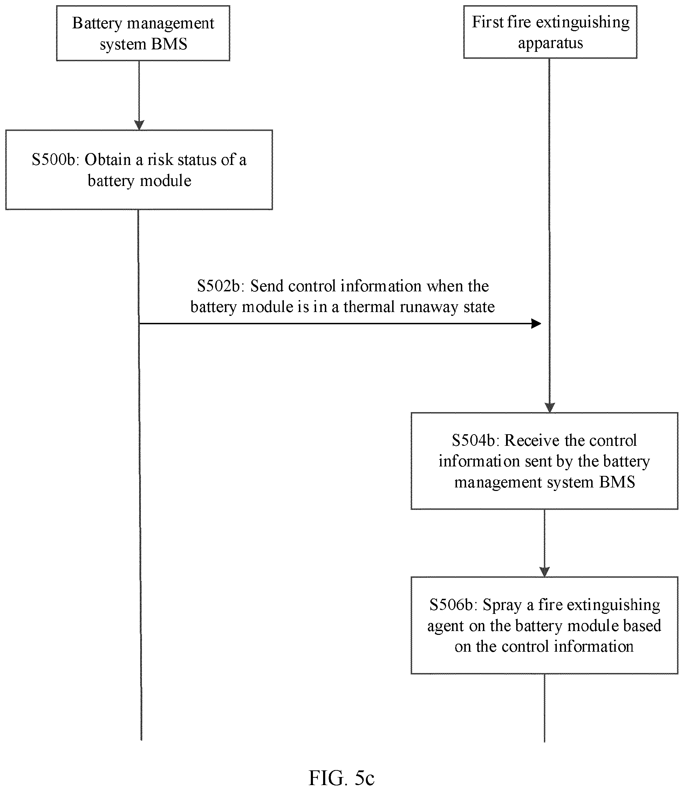

In a case, the battery module is in the thermal runaway state. As shown in FIG. 5c, the method may include but is not limited to the following steps.

Step S500b: The battery management system BMS obtains the risk status of the battery module.

Step S502b: When the battery module is in the thermal runaway state, the battery management system BMS sends the control information to the first fire extinguishing apparatus.

Step S504b: The first fire extinguishing apparatus receives the control information sent by the battery management system BMS.

Step S506b: The first fire extinguishing apparatus sprays the fire extinguishing agent on the battery module based on the control information.

For specific implementation of step S500b to step S506b, refer to the foregoing description. Details are not described herein again. It may be understood that this method may be applied to the battery system shown in FIG. 3 and FIG. 4.

Through implementation of this embodiment of this application, when the battery module is in the thermal runaway state, the first fire extinguishing apparatus sprays the fire extinguishing agent on the battery module under control of the battery management system BMS. In this implementation, a thermal runaway phenomenon of the battery module can be well suppressed from continuously spreading, and safety of the battery system can be improved. In addition, both an existing battery management system BMS and the fire extinguishing apparatus include a detection apparatus, and the detection apparatus is configured to detect an operating state of the battery module. However, in this application, the detection apparatus is no longer disposed on the first fire extinguishing apparatus, the detection apparatus is integrated into the battery management system BMS, and the first fire extinguishing apparatus and the battery management system BMS are communicatively connected through a bus. In this implementation, complexity of the battery system and total costs of the system can be reduced.

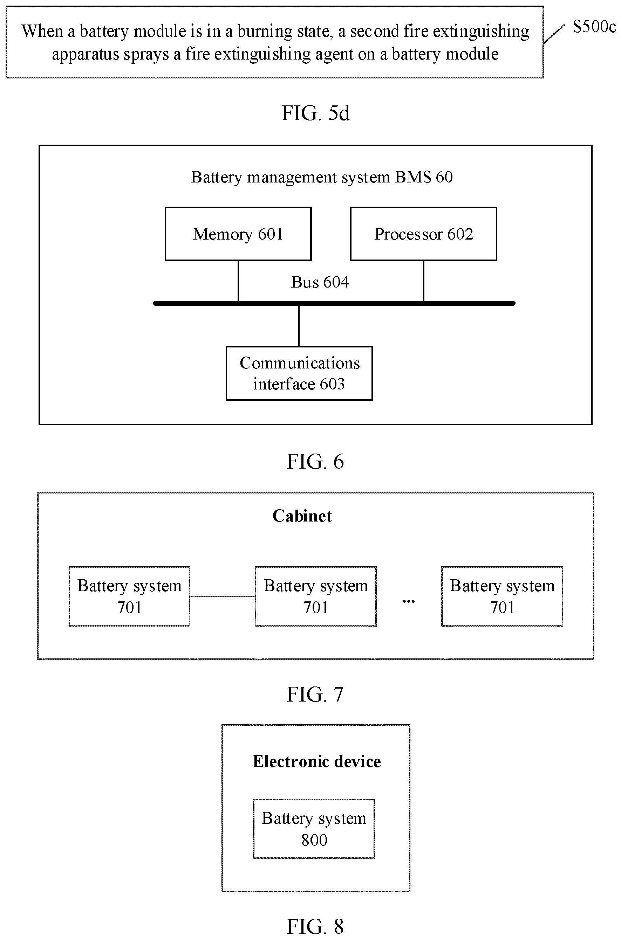

In a case, the battery module is in the burning state. As shown in FIG. 5d, the method may include but is not limited to the following steps.

Step S500c: When the battery module is in the burning state, the second fire extinguishing apparatus sprays the fire extinguishing agent on the battery module.

In this embodiment of this application, the second fire extinguishing apparatus may include a second detection apparatus and a fire extinguishing agent. In actual application, when the second detection apparatus detects that a temperature of the battery module is greater than a second temperature value, it may be determined that the battery module is in the burning state, and the second fire extinguishing apparatus is triggered to release the fire extinguishing agent. In this implementation, the battery fire can be well suppressed and a burning probability of the battery system can be reduced, thereby improving safety of the battery system. It may be understood that this method may be applied to the battery system shown in FIG. 4.

Generally, according to the method provided in this embodiment of this application, the battery fire can be well suppressed and the burning probability of the battery system can be reduced, thereby improving safety of the battery system.

FIG. 6 is a schematic diagram of a structure of a battery management system BMS according to an embodiment of this application. The battery management system BMS shown in FIG. 6 may include a memory 601, a processor 602, a communications interface 603, and a bus 604. The memory 601, the processor 602, and the communications interface 603 implement a communication connection between each other through the bus 604.

The memory 601 may be a read only memory (Read Only Memory, ROM), a static storage device, a dynamic storage device, or a random access memory (Random Access Memory, RAM). The memory 601 may store a program. When the program stored in the memory 601 is executed by the processor 602, the processor 602 and the communications interface 603 are configured to perform steps performed by using the battery management system BMS in embodiments of this application. For example, a risk status of a battery module is obtained by using a battery management system BMS. Control information is sent to a first fire extinguishing apparatus when the battery module is in a thermal runaway state. The control information is used to control the first fire extinguishing apparatus to spray a fire extinguishing agent on the battery module. For another example, when a safety valve of the battery module is in an open state, the battery management system BMS interrupts the charging/discharging process of the battery module.

The processor 602 may be a general-purpose central processing unit (Central Processing Unit, CPU), a microprocessor, an application-specific integrated circuit (Application Specific Integrated Circuit, ASIC), a graphics processing unit (graphics processing unit, GPU), or one or more integrated circuits, and is configured to execute a related program, to implement a function that needs to be performed by using the battery management system BMS in embodiments of this application, or perform the fire extinguishing method provided in the method embodiments of this application.

The processor 602 may alternatively be an integrated circuit chip and has a signal processing capability. In an implementation process, the steps of the neural network training method in this application may be completed by using a hardware integrated logic circuit in the processor 602 or instructions in a form of software. The processor 602 may be a general-purpose processor, a digital signal processor (Digital Signal Processor, DSP), an application-specific integrated circuit (ASIC), a field programmable gate array (Field Programmable Gate Array, FPGA) or another programmable logic device, a discrete gate or transistor logic device, or a discrete hardware component. The processing apparatus may implement or perform the methods, steps, and logical block diagrams that are disclosed in embodiments of this application. The general-purpose processor may be a microprocessor, or the processor may be any conventional processor, or the like. Steps of the method disclosed with reference to embodiments of this application may be directly executed and accomplished by a hardware decoding processor, or may be executed and accomplished by using a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory 601, and the processor 602 reads information in the memory 601, and completes, in combination with hardware of the processor 602, a function that needs to be performed by the unit included in the battery management system in embodiments of this application, or performs the fire extinguishing method provided in the method embodiments of this application.

The communications interface 603 uses a transceiver apparatus, for example but not for limitation, a transceiver, to implement communication between the apparatus 60 and another device or a communication network. For example, training data may be obtained through the communications interface 603 (for example, data of the battery module used in the method embodiments of this application).

The bus 604 may include a channel through which information is transmitted between parts (for example, the memory 601, the processor 602, and the communications interface 603) of the apparatus 600.

For specific implementation of the functional components, refer to related descriptions in the foregoing embodiments. Details are not described again in this embodiment of this application.

FIG. 7 is a schematic block diagram of a cabinet according to an embodiment of this application. As shown in FIG. 7, the cabinet 70 may include a plurality of battery systems 701. For a specific representation form of the battery system 70, refer to the foregoing description. Details are not described herein again.

It may be understood that, during implementation of this embodiment of this application, the battery system may perform different fire extinguishing policies when the battery module is in different risk statuses, thereby improving safety of the battery system.

FIG. 8 is a schematic block diagram of an electronic device according to an embodiment of this application. As shown in FIG. 8, the electronic device includes a battery system 800. Herein, for a specific representation form of the battery system 800, refer to the foregoing description. Details are not described herein again.

In this embodiment of this application, the electronic device may be a charging apparatus in an electric vehicle, or may be an energy storage apparatus in a communications base station, or may be a lithium battery apparatus. This is not specifically limited in this embodiment of this application.

An embodiment of this application further provides a computer-readable storage medium, where the computer-readable storage medium is configured to store a computer program for implementing the above-described fire extinguishing method for the battery system. The computer program enables the electronic device to perform some or all of the steps of any fire extinguishing method for the battery system described in the foregoing method embodiments.

An embodiment of this application further provides a computer program product. The computer program product includes a non-transitory computer-readable storage medium storing a computer program. The computer program is operable to enable the electronic device to perform some or all of the steps of any convolution operation method described in the foregoing method embodiments.

It may be understood that a person of ordinary skill in the art may be aware that units and algorithm steps in the examples described with reference to the embodiments disclosed in embodiments of this application can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art can appreciate that the functions described with reference to the various illustrative logic blocks, modules, and algorithm steps disclosed in embodiments of this application may be implemented by hardware, software, firmware, or any combination thereof. If software is used for implementation, the functions described with reference to the illustrative logical blocks, modules, and steps may be stored in or transmitted over a computer-readable medium as one or more instructions or code and executed by a hardware-based processing unit. The computer-readable medium may include a computer-readable storage medium. The computer-readable storage medium corresponds to a tangible medium such as a data storage medium, or a communications medium including any medium that facilitates transfer of a computer program from one place to another place (for example, according to a communications protocol). In this manner, the computer-readable medium may generally correspond to: (1) a non-transitory tangible computer-readable storage medium, or (2) a communication medium, for example, a signal or a carrier. The data storage medium may be any available medium that can be accessed by one or more computers or one or more processors to retrieve instructions, code, and/or data structures for implementing the technologies described in this application. A computer program product may include a computer-readable medium.

A person skilled in the art may clearly understand that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other similar forms.

The units described as separate components may or may not be physically separate, and components displayed as units may or may not be physical units. To be specific, the components may be located at one position, or may be distributed on a plurality of network units. Some or all of the units may be selected based on actual requirements to achieve the objectives of the solutions of the embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or a part contributing to an existing technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A battery system, wherein the battery system comprises a battery management system BMS and at least one battery module, wherein the battery management system BMS comprises a first detection apparatus;
the battery management system BMS is configured to obtain a risk status of the battery module by using the first detection apparatus; and
the battery management system BMS is further configured to perform fire extinguishing based on the risk status.

2. The battery system according to claim 1, wherein the battery system further comprises at least one first fire extinguishing apparatus, and the first fire extinguishing apparatus establishes a communication connection to the battery management system BMS;
the battery management system BMS is configured to send control information to the first fire extinguishing apparatus when the battery module is in a thermal runaway state; and
the first fire extinguishing apparatus is configured to spray a fire extinguishing agent on the battery module based on the control information sent by the battery management system BMS.

3. The battery system according to claim 1 or 2, wherein the battery system further comprises at least one second fire extinguishing apparatus; and
the second fire extinguishing apparatus is configured to spray the fire extinguishing agent on the battery module when the battery module is in a burning state.

4. The battery system according to any one of claims 1 to 3, wherein the battery management system BMS is specifically configured to:
interrupt a charging/discharging process of the battery module when a safety valve of the battery module is in an open state.

5. The battery system according to claim 4, wherein the battery management system BMS is specifically configured to:
when the battery management system BMS detects, by using the first detection apparatus, that a concentration value of a flammable gas released by the battery module is greater than a first concentration value, and a value of smoke released by the battery module is greater than a first smoke value, determine that the safety valve of the battery module is in the open state.

6. The battery system according to any one of claims 1 to 5, wherein the battery management system BMS is further specifically configured to:
when the battery management system BMS detects, by using the first detection apparatus, that the concentration value of the flammable gas released by the battery module is greater than a second concentration value, the value of smoke released by the battery module is greater than a second smoke value, and a temperature of the battery module is greater than a first temperature value, determine that the battery module is in the thermal runaway state.

7. The battery system according to claim 3, wherein the second fire extinguishing apparatus comprises a second detection apparatus; and the second fire extinguishing apparatus is specifically configured to:
spray the fire extinguishing agent on the battery module when the second detection apparatus detects that a temperature of the battery module is greater than a second temperature value.

8. The battery system according to claim 1, wherein the battery management system BMS comprises a sending apparatus; and
the sending apparatus is configured to send control information to the first fire extinguishing apparatus when the battery module is in a thermal runaway state.

9. A fire extinguishing method for a battery system, wherein the battery system comprises a battery management system BMS and at least one battery module, the battery management system BMS comprises a first detection apparatus, and the method comprises:
obtaining, by the battery management system BMS, a risk status of the battery module by using the first detection apparatus; and
performing, by the battery management system BMS, fire extinguishing based on the risk status.

10. The method according to claim 9, wherein the battery system further comprises a first fire extinguishing apparatus, and the method further comprises:
sending control information to the first fire extinguishing apparatus when the battery module is in a thermal runaway state, wherein the control information is used to control the first fire extinguishing apparatus to spray a fire extinguishing agent on the battery module.

11. The method according to claim 9 or 10, wherein the battery system further comprises a second fire extinguishing apparatus, and the method further comprises:
spraying the fire extinguishing agent on the battery module when the battery module is in a burning state.

12. The method according to any one of claims 9 to 11, wherein the performing, by the battery management system BMS, fire extinguishing based on the risk status comprises:
interrupting a charging/discharging process of the battery module when a safety valve of the battery module is in an open state.

13. The method according to claim 12, wherein the obtaining, by the battery management system BMS, a risk status of the battery module by using the first detection apparatus comprises:
when the battery management system BMS detects, by using the first detection apparatus, that a concentration value of a flammable gas released by the battery module is greater than a first concentration value, and a value of smoke released by the battery module is greater than a first smoke value, determining that the safety valve of the battery module is in the open state.

14. The method according to any one of claims 9 to 13, wherein the obtaining, by the battery management system BMS, a risk status of the battery module by using the first detection apparatus further comprises:
when the battery management system BMS detects, by using the first detection apparatus, that the concentration value of the flammable gas released by the battery module is greater than a second concentration value, the value of smoke released by the battery module is greater than a second smoke value, and a temperature of the battery module is greater than a first temperature value, determining that the battery module is in the thermal runaway state.

15. The method according to claim 11, wherein the second fire extinguishing apparatus comprises a second detection apparatus, and the spraying the fire extinguishing agent on the battery module when the battery module is in a burning state comprises:
spraying the fire extinguishing agent on the battery module when the second detection apparatus detects that a temperature of the battery module is greater than a second temperature value.

16. The method according to claim 11, wherein the battery management system BMS comprises a sending apparatus, and the sending control information to the first fire extinguishing apparatus when the battery module is in a thermal runaway state comprises:
sending, by the battery management system BMS by using the sending apparatus, the control information to the first fire extinguishing apparatus when the battery module is in the thermal runaway state.

17. A cabinet, wherein the cabinet comprises the battery system according to any one of claims 1 to 8.

18. An electronic device, wherein the electronic device comprises the battery system according to any one of claims 1 to 8.
